# EUROPEAN PATENT SPECIFICATION

(11) **EP 3 433 426 B1**
(45) Date of publication and mention of the grant of the patent: **15.09.2021**
(21) Application number: 17771068.8
(22) Date of filing: 22.03.2017
(51) Int. Cl.: D21H 19/72, D21H 19/74, D21H 27/02, D21H 27/22, D21F 11/12, B31F 1/08, B31F 1/12, B31F 1/20, B31F 1/22, D21H 25/00

(54) **SYSTEM AND METHOD FOR INDUCING FLUTING IN A PAPER PRODUCT BY EMBOSSING WITH RESPECT TO MACHINE DIRECTION**
SYSTEM UND VERFAHREN ZUR INDUZIERUNG VON RIFFELUNG IN EINEM PAPIERPRODUKT DURCH PRÄGUNG IN BEZUG AUF DIE MASCHINENRICHTUNG
SYSTÈME ET PROCÉDÉ POUR FORMER DES RAINURES PAR GAUFRAGE DANS UN PRODUIT EN PAPIER SELON LE SENS MACHINE

(30) Priority: 22.03.2016 US 201615077250
(43) Date of publication of application: 30.01.2019
(73) Proprietor: SCORRBOARD, LLC, Renton WA 98057 (US)
(72) Inventor: GREENFIELD, Giles, Renton, WA 98057 (US)
(74) Representative: Potter Clarkson
(86) International application number: PCT/US2017/023611
(87) International publication number: WO 2017/165534

(56) References cited:
- WO-A1-01/58679
- WO-A1-2013/098353
- WO-A1-2015/128546
- US-A- 4 140 564
- US-A- 5 630 903
- US-A1- 2014 141 113
- US-A1- 2015 010 734
- US-B1- 6 261 666
- US-B1- 6 800 052
- US-B2- 7 963 899

## Description

### BACKGROUND

Modern paper-making techniques use paper machines at paper mills to produce rolls of paper that can, in turn, be used by board makers to produce board products (*i.e*., corrugated board). As a result, rolls of paper may be produced from machines that operate continuously. Modern paper machines typically produce paper from a number of substances including wood pulp that comprise wood fibers (although other fibers may also be used). These fibers tend to be elongated and suitable to be aligned next to one another. The fiber starts as a slurry that can be fed onto a moving screen from a head box of the paper machine. In modern paper machines, the fibers tend to align with each other and align with a direction in which the screen is moving. This alignment direction of underlying fibers is called the major direction of the paper and is in line with the machine direction. Thus, the major direction is often simply called the machine direction (MD) and the paper that is produced has an associated MD value.

Therefore, when paper is wound at the end of the papermaking process, the roll is paper wound up in the machine direction. Because of the alignment of underlying fibers in the machine direction of the paper, the paper itself exhibits greater strength in the machine direction when compared to a cross direction (CD) that is perpendicular to the machine direction. That is, the paper may bend, fold, or deform more easily in a cross direction as compared to the machine direction because the CD value is less than the MD value.

When paper is used to make a board product, portions of the paper used for the board product may be corrugated. Traditional corrugating machines will corrugate the underlying paper product in the cross direction of the paper thereby failing to take advantage of the natural strength bias of the paper in the machine direction. Alternatively, US 6,261,666 discloses the use of embossing rolls to create embossments in a paper product, although such embossments again extend in the cross direction of the paper. In an effort to increase the cross direction strength (at the expense of strength in the machine direction), paper makers have sought solutions that attempt to disrupt the natural alignment of fibers when fed to the initial screen at the head box of a paper machine. Such solutions, however, lead to slower paper machine operating speeds and a decrease in paper machine efficiency. As a result, papermaking efficiency is sacrificed for greater paper strength in the cross direction because of traditional corrugating techniques. Further, the greater natural strength qualities of paper in the machine direction is left unharnessed by cross corrugation techniques in board making solutions.

### BRIEF DESCRIPTION OF THE DRAWINGS

Aspects and many of the attendant advantages of the claims will become more readily appreciated as the same become better understood by reference to the following detailed description, when taken in conjunction with the accompanying drawings, wherein:
**FIG. 1** is a diagram of aspects of a machine for feeding paper into a conventional corrugating stage.
**FIG. 2** is a diagram of a portion of resultant corrugated paper product that results from the conventional corrugating roll of **FIG. 1****.**
**FIG. 3** is a diagram of aspects of a machine for feeding paper into an embossing stage in a machine direction according to an embodiment of the subject matter disclosed herein.
**FIG. 4** is a diagram of a portion of a resultant fluted paper product that results from the embossing roll of **FIG. 3** according to an embodiment of the subject matter disclosed herein.
**FIG. 5** is a diagram of aspects of a machine for feeding paper into a scoring stage in a machine direction according to another alternative arrangement.
**FIG. 6** is a diagram of a portion of a resultant scored paper product that results from the scoring roll of **FIG. 5** according to another alternative arrangement.

### DETAILED DESCRIPTION

By way of overview, the subject matter disclosed herein may be directed to a system and method for inducing fluting in paper in a machine direction of the paper. In a conventional board-making manufacturing setting, rolls of paper may be unwound in a machine direction and then corrugated in the cross-direction. Corrugating in the cross direction fails to take advantage of the MD value of the paper. Inducing fluting through embossing or scoring in the same direction as the underlying fibers (*e.g*., the machine direction) of the paper employs the natural strength in the machine direction of the paper used to create the fluted medium in a board product.

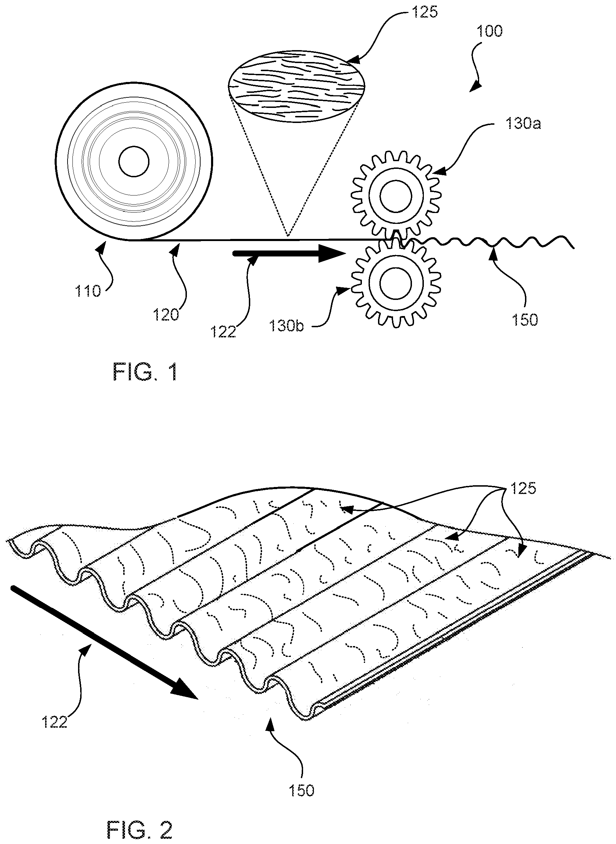

In one embodiment, a method of producing the fluting for a board product includes unwinding paper from a paper roll in a machine direction. Then, an embossing stage embosses the paper to induce fluting. The induced fluting is also aligned with the machine direction of the paper thereby having the fluting aligned with higher MD value (as compared to the CD value). Further, linear embossing paper for fluting greatly reduces take-up compared with conventional corrugating. These and other aspects will become apparent in the detailed description of the embodiments as discussed below with respect to **FIGs. 1-6****.**

**FIG. 1** is a diagram of aspects of a machine ***100*** for feeding paper into conventional corrugating rolls. Of course, conventional corrugating machine will have a number of additional aspects and parts, but for the purposes of this discussion, only these portions depicted in **FIG.** 1 are needed. In this diagram, a roll of paper ***110*** may be unwound from a feed roll such that a leading edge of paper ***120*** may be fed in a first direction ***122*** toward machinery suited to shape, cut, mold, combine, or otherwise change the paper ***110*** into a new product. In **FIG. 1****,** only a corrugating stage is shown for simplicity. Thus, as paper ***120*** is unwound from the paper roll ***110,*** the paper ***120*** propagates in the first direction ***122.***

The paper ***120*** in **FIG. 1** may be fed into a corrugator that includes a first corrugating roll ***130a*** that is aligned to work in concert with a second corrugating roll ***130b.*** Thus, as paper ***120*** is fed between the first and second corrugating rolls ***130a*** and ***130b,*** ribs from the corrugating rolls form the paper into a desired fluted shape. That is, the paper ***120*** forms around the ribs of the first corrugating roll ***130a*** and the second corrugating roll in a meshed sequence resulting in corrugated paper. The resultant product is a fluted paper ***150*** exhibiting a shape that resembles the shape of the ribs of each corrugating roll ***130a*** and ***130b.*** The fluted paper ***150*** may then be referred to as a corrugated medium and may be used in conjunction with additional papers to form a corrugated board having one or more corrugated mediums glued to one or more facings.

One problem with corrugating paper for use in corrugated board making is that the paper needed for the fluted medium is much greater than the paper needed for the facing. This is obvious in so much as the overall length of the paper run, when formed and folded around corrugating ribs becomes a longer path than simply the flat facing portion of the corrugated board product. This lineal difference is often referred to as "take-up factor". Depending on the size of the fluting, the take-up factor may be rather high (for example, 43% for a common C-flute profile). The fluted paper ***150*** is manufactured on corrugating machines ***100*** of **FIG. 1** at speeds up to 1500 feet per minute.

Paper is produced at paper mills dedicated solely to producing paper on rolls. Then, the paper rolls are shipped to a board-making plants where a machine (portions of which are shown as machine 100 in **FIG. 1**) may be located. As the papermaking process is accomplished by a papermaking entity and board products are produced by a different entity, many times the interests of each entity are not aligned.

One example of misaligned interests includes the method and machine at a paper mill that produce the underlying paper ***120*.** As shown in the exploded section of **FIG. 1****,** underlying fibers ***125*** of the paper tend to be elongated and aligned with respect to each other in machine direction ***122.*** As the speed of a paper machine is increased, the slurry is quickly fed out of a head box, the natural tendency of the underlying fibers is to further align along the machine direction of the paper machine. This results in a final paper product that has most underlying fibers aligned in the machine direction. As is discussed further below, board makers may have an interest in having highly misaligned fibers in the paper (*e.g.,* fibers laid out in all direction irrespective of machine direction). Prior to discussing reasons why, further aspects of the papermaking process are discussed.

As has been discussed, the machine direction of the paper ***120*** exhibits greater strength characteristics (MD value) as well as greater resistance to bending when compared to the cross direction of the paper (CD value). This is mostly due to the nature of papermaking causing the underlying fibers to align in the machine direction. Of course, when the paper roll ***110*** is then unwound at a next manufacturing stage, as is shown in **FIG. 1**, the machine direction of the paper ***120*** remains aligned with the machine direction ***122*** of the corrugating process.

In the machine ***100*** of **FIG. 1**, the corrugating rolls ***130a*** and ***130b*** corrugate the paper in the cross direction of the paper ***120.*** That is, the corrugating of the paper ***120*** is not linear with respect to the machine direction ***122*** and any resultant flutes have a direction perpendicular to both the corrugating machine direction ***122*** and the machine direction of the paper ***120.*** This is shown in greater detail with respect to **FIG. 2****.**

**FIG. 2** is a diagram of a portion of a resultant corrugated paper product ***150*** that results from the conventional corrugating machine ***100*** of **FIG. 1****.** This diagram shows an isometric view of a portion of the fluted paper ***150.*** The machine direction ***122*** is shown in **FIG. 2** and is perpendicular to the flute direction as the flutes are in the cross direction of the paper. As is shown, the underlying fibers ***125*** remain aligned in the machine direction of the paper, which is also aligned with the corrugating machine direction ***122.*** However, the flutes are formed perpendicular to most underlying fibers ***125.*** This results in flutings that are not aligned with fibers and therefore do not take advantage of the natural strength of the MD value of the paper (when compared to the CD value). Such a failure to harness the MD value of the paper leads to inefficiencies on the manufacturing of board products when a specific board strength is to be realized. That is, it will necessarily take more paper (heavier paper, larger flutes, and the like) to realize the required board strength..

In an effort to increase CD values in paper (for the specific purposes of board making), paper-makers may be required to intentionally try to misalign underlying fibers in an effort to make the paper product stronger in the cross direction. This may result in less strength in the machine direction, but eventually leads to greater strength in the finished board product or box product as the paper product is corrugated in the cross direction. Intentionally misaligned the underlying fibers are, many times, achieved through agitation at head box on paper machines but at the expense of paper machine speed.

Thus, board-makers have an interest in a paper product that has a greater CD value because corrugators will corrugate in the cross direction. However, paper makers have an interest in producing paper with underlying fibers aligned in the machine direction (*e.g*., a greater MD value) as such an alignment requires less complex equipment and allows paper machines to operate at greater speeds. This misaligned interest then leads to compromising the efficiency of the paper maker or the products of the board maker; this is all because of cross corrugation. The remainder of the disclosure discusses linear embossing or linear scoring techniques that realign this interest.

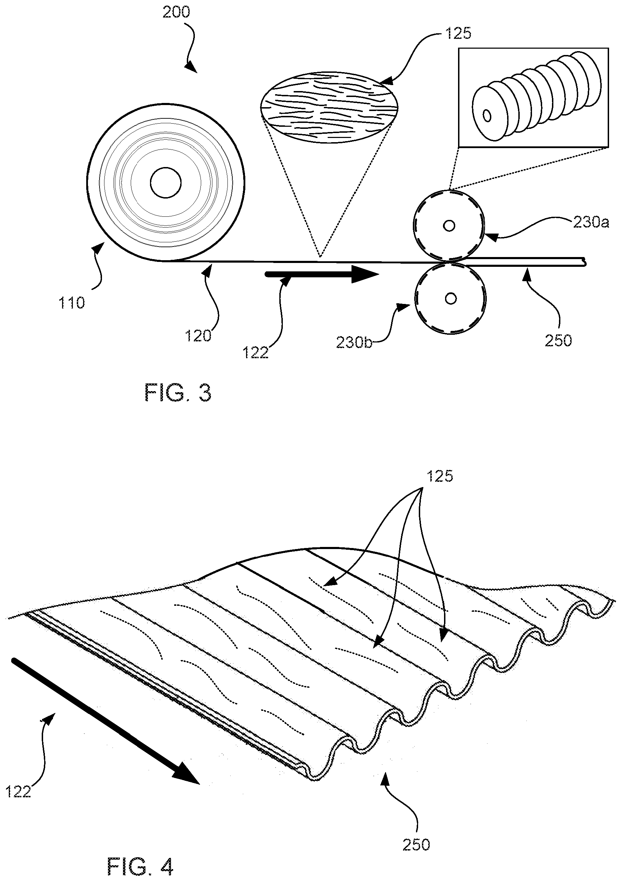

**FIG. 3** is a diagram of aspects of a machine ***200*** for feeding paper into an embossing stage in a machine direction according to an embodiment of the subject matter disclosed herein. In this embodiment, a paper roll ***110*** may be unwound such that paper ***120*** is fed into a pair of embossing rolls ***230a*** and ***230b*** in an embossing stage. The embossing rolls ***230a*** and ***230b*** include ribs that are aligned with the machine direction ***122*** as shown in the exploded box of **FIG. 3****.** That is, the grooves and valleys of the embossing rolls ***230a*** and ***230b*** will induce fluting in the machine direction ***122,*** which is also aligned with the greater MD value of the paper ***120.*** Further, the embossing stage may have additional features including portions suited to condition the paper, such as a heating, wetting or moisturizing section. These and other additional aspects of creating a linear embossed fluting are not discussed further herein for brevity.

Embossing is a process that stretches and deforms the paper going through the embossing rolls ***230a*** and ***230b.*** As the paper ***120*** is squeezed through an embossing roll ***230a*** that is closely aligned with a counterpart embossing roll ***230b,*** the paper ***120*** tends to stretch away from the contact points between the embossing rolls ***230a*** and ***230b.*** The resultant embossed paper ***250*** now has a width that is greater due to the stretching of the paper in the lateral direction. But, the embossed paper ***250*** now includes fluting such the original width of the pre-embossed paper ***120*** is almost equivalent to the width of the resultant fluted medium. Further, the length of the paper ***120*** (as defined by the machine direction of the paper ***120***) also remains unaffected by the embossing process.

As will be discussed further in **FIG. 4** below, the embossing process results in almost no take-up factor, and in some applications, zero take-up factor. This is because the flutes are not simply formed around corrugating ribs, but are actually stretched to result in a desired pattern. The embossed pattern then yields a fluted pattern similar to corrugating. Therefore, inducing fluting through embossing leads to a large increase in efficiency (*e.g*., reduction in take-up factor by as much as 43% in the case of a C-flute profile) while also taking advantage of the MD value of the paper that makes up the fluted medium ***250.***

In the embodiment of **FIG. 3****,** the grooves and valleys of the embossing rolls ***230a*** and ***230b*** are curvilinear such that a sinusoidal flute may be induced. Other embodiments may include a triangular pattern, saw-tooth pattern, semi-rectangular pattern, or any other embossing pattern whereby some form of fluting is induced in the underlying paper ***120*** being fed through the embossing rolls ***230a*** and ***230b.*** In other embodiments, only one of the embossing rolls may have a specific flute inducing shape while a counterpart roll may be flat (not shown). In still further embodiments, the machine ***200*** may include additional embossing rolls (not shown) for second and third embossing stages in an effort to induce or enhance a desired fluting.

**FIG. 4** is a diagram of a portion of a resultant fluted paper product ***250*** that results from the embossing stage of **FIG. 3** according to an embodiment of the subject matter disclosed herein. As has been discussed with respect to **FIG. 3****,** the induced flutes are congruent with the machine direction ***122.*** Thus, the underlying long fibers ***125*** of the paper remain aligned with the flute direction. Having the underlying long fibers aligned with the fluting results in an alignment of the fluting with the greater MD value of the paper (when compared to the CD value). As the cross corrugating techniques of the machine ***100*** of **FIG. 1** would necessarily have corrugations aligned with the CD value of the paper, the linear embossing process using the machine *200* of **FIG. 3** takes advantage of the MD value of the paper by aligning the flutes in the machine direction. Therefore, the flute-inducing embossing process of the machine ***200*** of **FIG. 3** allows for less total fiber to be used in achieving a specific strength of corrugated board.

Such a linear embossing system and method leads to efficiencies on several levels and succeeds in realigning the interests of paper makers and board/box makers. First, linear embossing allows the paper maker to disregard any need to carefully control the alignment (or rather non-alignment) of the pulp fibers when first poured onto a screen on a paper machine. Recall that in order to improve strength in the cross direction, paper machines may include a head box that attempted to combat the natural alignment of underlying long fibers in the machine direction. With linear embossing, the need for improved strength in the cross direction is reduced or eliminated. Therefore, the papermaker can focus on improving the speed of the paper machine.

Second, board makers can produce board products with less paper material. The linear embossing systems and methods discussed herein lead to a fluted medium that requires less material for production. That is, in conventional corrugating machines, the paper needed for the fluted medium is greater than the paper needed for a facing portion (in linear terms). Thus, the efficiency gain is two-fold: less overall paper used in making corrugated board and greater strength in the resultant board by aligning the MD value in both fluting and facings.

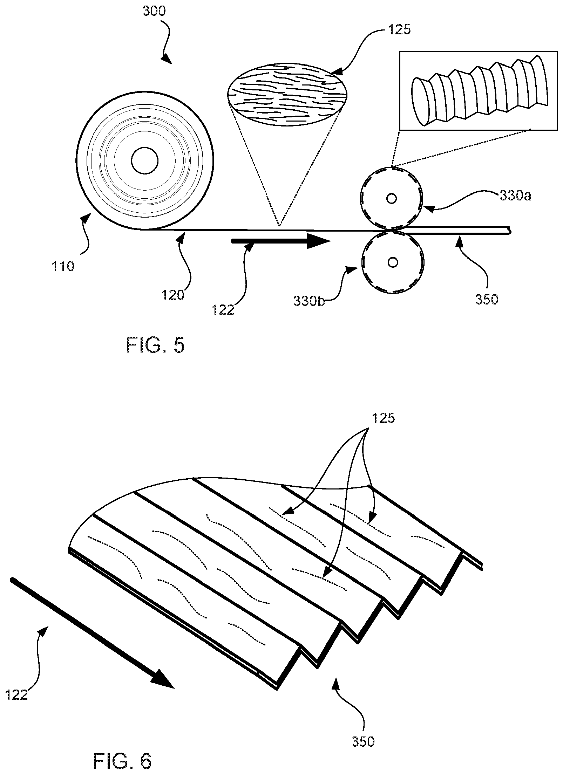

The embodiments as discussed with respect to **FIGs. 3** and **4** have an embossing stage that induces a sinusoidal shape of a flute. However, other embodiments may include different shapes for embossing rolls, (such as triangular, saw-tooth, and the like) or even simply a scoring stage. The embodiments as discussed with respect to **FIGs. 5** and **6** are an example of fluting that is shaped or formed from a process other than the sinusoidal shape of the embodiments discussed with respect to **FIGs. 3** and **4****.**

**FIG. 5** is a diagram of a portion of a machine for feeding paper into a scoring stage in a machine direction according to an alternative arrangement. In this arrangement, a paper roll ***110*** may be unwound such that paper ***120*** is fed into a pair of scoring rolls ***330a*** and ***330b*** in a scoring stage. The scoring rolls ***330a*** and ***330b*** include ribs that are aligned with the machine direction ***122*** as shown in the exploded box of **FIG. 5****.** That is, the grooves and valleys of the scoring rolls ***330a*** and ***330b*** will induce scoring lines that lead to fluting in the machine direction ***122,*** which is also aligned with the machine direction of the paper ***120.***

Similar to embossing, scoring is a process that stretches or deforms the paper going through the scoring rolls ***330a*** and ***330b.*** As a portion of the paper **120** is squeezed through a scoring roll ***330a*** that is closely aligned with a counterpart scoring roll ***330b,*** the paper ***120*** tends to stretch out away from the scoring point.

The resultant scored paper ***350*** now has a width that is greater due to the stretching of the paper in a lateral direction. But, the scored paper ***350*** now includes fluting such the original width of the pre-scored paper ***120*** is almost equivalent to the width of the resultant fluted medium. Further, the length of the paper ***120*** (as defined by the machine direction of the paper ***120***) also remains unaffected by the scoring process. As before, with respect to embossing, the scoring process results in almost no take-up factor. This is because the flutes are not simply formed around corrugating ribs, but are actually stretched to result in a desired pattern. The scored pattern then yields a fluted pattern similar to corrugating. Therefore, inducing fluting through scoring leads to an increase in efficiency while also taking advantage of the MD value of the paper that makes up the fluted medium ***350.***

**FIG. 6** is a diagram of a portion of resultant scored paper product that results from the scoring roll of **FIG. 5** according to an alternative arrangement. In **FIG. 6****,** the induced shape change from flat paper is shown in a bit of an exaggerated manner whereby the scoring leads to a distinct triangular shape of flutes. Such a distinct triangular pattern may be more noticeable with a triangular-toothed embossing stage, but the concept remains the same. Scoring induced by scoring rolls ***330a*** and ***330b*** cause induced fluting in the machine direction of the paper that is aligned with the corrugating machine direction ***122*** as well as the elongated fibers ***125*** of the paper itself.

## Claims

1. A method for making a paper product (250) with improved efficiency, the method comprising the steps of:
unwinding paper (120) from a roll (110) of paper in a machine direction (122), the paper (120) having a machine direction (MD) value and a cross direction (CD) value; and
feeding the unwound paper (120) into one or more pairs of embossing rolls (230a, 230b) in the machine direction (122),
the method being **characterised by** the step of inducing flutes in the paper (120) in the machine direction (122).

2. The method of claim 1, further comprising stretching the paper (120) when inducing the flutes in the paper (120).

3. The method of claim 1, further comprising combining the fluted paper (250) with one or more additional paper products to form a board product.

4. The method of claim 1, further comprising:
feeding the fluted paper (250) into a cutting machine in the machine direction (122); and
cutting the fluted paper (250) at one or more intervals.

5. The method of claim 1, further comprising:
feeding the fluted paper (250) into a gluing machine in the machine direction (122); and
gluing the fluted paper (250) to one or more facings.

6. The method of claim 1, further comprising:
feeding the fluted paper (250) into a board-making machine in the machine direction (122);
feeding a non-fluted paper into the board-making machine in concert with the fluted paper (250); and
producing a board product that results in zero take-up of the fluted paper (250) with respect to the non-fluted paper.

7. The method of claim 1, wherein the paper (120) unwound from the paper roll (110) comprises a fiber pattern having an MD value greater than a CD value.

8. The method of claim 1, wherein the machine direction (122) of the paper is with respect to underlying aligned fibers (125).

## Patentansprüche

1. Verfahren zum Herstellen eines Papierprodukts (250) mit verbesserter Effizienz, wobei das Verfahren die folgenden Schritte umfasst:
Abwickeln von Papier (120) von einer Rolle (110) Papier in einer Maschinenrichtung (122), wobei das Papier (120) einen Maschinenrichtungs(machine direction - MD)-Wert und einen Querrichtungs(cross direction - CD)-Wert aufweist; und
Einführen des abgewickelten Papiers (120) in ein oder mehrere Paare von Prägewalzen (230a, 230b) in der Maschinenrichtung (122),
wobei das Verfahren durch den Schritt eines Erzeugens von Riffelungen in dem Papier (120) in der Maschinenrichtung (122) gekennzeichnet ist.

2. Verfahren nach Anspruch 1, das ferner ein Strecken des Papiers (120) umfasst, wenn die Riffelungen in dem Papier (120) erzeugt werden.

3. Verfahren nach Anspruch 1, das ferner ein Kombinieren des geriffelten Papiers (250) mit einem oder mehreren zusätzlichen Papierprodukten umfasst, um ein Kartonprodukt auszubilden.

4. Verfahren nach Anspruch 1, das ferner Folgendes umfasst:
Einführen des geriffelten Papiers (250) in eine Schneidemaschine in der Maschinenrichtung (122); und
Schneiden des geriffelten Papiers (250) in einem oder mehreren Intervallen.

5. Verfahren nach Anspruch 1, das ferner Folgendes umfasst:
Einführen des geriffelten Papiers (250) in eine Klebemaschine in der Maschinenrichtung (122); und
Kleben des geriffelten Papiers (250) auf eine oder mehrere Deckschichten.

6. Verfahren nach Anspruch 1, das ferner Folgendes umfasst:
Einführen des geriffelten Papiers (250) in eine Kartonherstellungsmaschine in der Maschinenrichtung (122);
Einführen eines nicht-geriffelten Papiers in die Kartonherstellungsmaschine zusammen mit dem geriffelten Papier (250); und
Produzieren eines Kartonprodukts, das zu einer Nullaufnahme des geriffelten Papiers (250) in Bezug auf das nicht-geriffelte Papier führt.

7. Verfahren nach Anspruch 1, wobei das Papier (120), das von der Papierrolle (110) abgewickelt wird, ein Fasermuster umfasst, das einen MD-Wert aufweist, der größer als ein CD-Wert ist.

8. Verfahren nach Anspruch 1, wobei die Maschinenrichtung (122) des Papiers in Bezug auf darunterliegende ausgerichtete Fasern (125) ist.

## Revendications

1. Procédé de fabrication d'un produit en papier (250) présentant une efficacité améliorée, le procédé comprenant les étapes consistant à :
dérouler le papier (120) d'un rouleau (110) de papier dans un sens machine (122), le papier (120) ayant une valeur dans le sens machine (MD) et une valeur dans le sens travers (CD) ; et
alimenter le papier déroulé (120) dans une ou plusieurs paires de rouleaux gaufreurs (230a, 230b) dans le sens machine (122),
le procédé étant **caractérisé par** l'étape d'induction de cannelures dans le papier (120) dans le sens machine (122).

2. Procédé selon la revendication 1, comprenant en outre l'étirement du papier (120) lors de l'induction des cannelures dans le papier (120).

3. Procédé selon la revendication 1, comprenant en outre la combinaison du papier cannelé (250) avec un ou plusieurs produits en papier supplémentaires pour former un produit en carton.

4. Procédé selon la revendication 1, comprenant en outre :
l'alimentation du papier cannelé (250) dans une machine de découpe dans le sens machine (122) ; et
la découpe du papier cannelé (250) au niveau d'un ou de plusieurs intervalles.

5. Procédé selon la revendication 1, comprenant en outre :
l'alimentation du papier cannelé (250) dans une machine de collage dans le sens machine (122) ; et
le collage du papier cannelé (250) sur une ou plusieurs surfaces.

6. Procédé selon la revendication 1, comprenant en outre :
l'alimentation du papier cannelé (250) dans une machine de fabrication de carton dans le sens machine (122) ;
l'alimentation d'un papier non cannelé dans la machine de fabrication de carton de concert avec le papier cannelé (250) ; et
la production d'un produit en carton qui résulte en un bobinage nul du papier cannelé (250) par rapport au papier non cannelé.

7. Procédé selon la revendication 1, le papier (120) déroulé du rouleau de papier (110) comprenant un motif de fibres ayant une valeur MD supérieure à une valeur CD.

8. Procédé selon la revendication 1, le sens machine (122) du papier étant par rapport aux fibres alignées sous-jacentes (125).
